# EUROPÄISCHE PATENTSCHRIFT

(11) **EP 1 106 456 B1**
(45) Veröffentlichungstag und Bekanntmachung des Hinweises auf die Patenterteilung: **03.08.2005**
(21) Anmeldenummer: 00125890.4
(22) Anmeldetag: 27.11.2000
(51) Int. Cl.: B60S 1/52

(54) **Scheibenreinigungsvorrichtung**
Windscreen cleaning device
Dispositif de nettoyage de pare-brise

(30) Priorität: 02.12.1999 DE 19958196
(43) Veröffentlichungstag der Anmeldung: 13.06.2001
(73) Patentinhaber: Siemens Aktiengesellschaft, 80333 München (DE)
(72) Erfinder: Vogt, Gerhard, 36179 Bebra (DE)

(56) Entgegenhaltungen:
- DE-A- 2 221 522
- DE-A- 2 503 256
- DE-A- 19 746 059
- DE-A- 19 802 491
- GB-A- 447 043
- GB-A- 924 557
- US-A- 2 772 115
- US-A- 5 163 619

## Beschreibung

Die Erfindung betrifft eine Scheibenreinigungsvorrichtung insbesondere für ein Kraftfahrzeug mit einer Düseneinrichtung zum Sprühen von Reinigungsflüssigkeit, wobei die Düseneinrichtung verstellbar an einem Halteteil gelagert ist.

Aus der Offenlegungsschrift DE 197 42 471 A1 ist eine gattungsgemäße Scheibenreinigungsvorrichtung bekannt, die eine Düseneinrichtung in Form einer Fluidic-Düse zum Sprühen von Reinigungsflüssigkeit auf die Scheibe eines Kraftfahrzeuges aufweist. Die Düseneinrichtung ist über ein Kugelgelenk an einem Halteteil gelagert, das zugleich einen Anschlußstutzen für die Reinigungsflüssigkeit bildet. Das Halteteil ist unveränderlich an einem Karosserieteil des Kraftfahrzeuges festlegbar, während die Düseneinrichtung relativ zu dem Halteteil verdrehbar und zum Ausgleich von Toleranzen gegenüber der Scheibe ausrichtbar ist.

Aus der Offenlegungsschrift DE 196 52 083 A1 ist eine Scheibenreinigungsvorrichtung mit einem Düsenstock und einer Waschdüse, insbesondere einer Fluidic-Düse, bekannt, wobei die Scheibenreinigungsvorrichtung als starres, in sich nicht verstellbares Bauteil ausgeführt und an einer ersten Lagerstelle verschwenkbar an der Karosserie eines Kraftfahrzeuges gelagert ist. An einer zweiten Lagerstelle ist die Scheibenreinigungsvorrichtung über eine Exzenterschraube und eine Klemmfedereinrichtung verstellbar an der Karosserie angeordnet. Durch ein Verstellen der Exzenterschraube läßt sich die gesamte Scheibenreinigungsvorrichtung zum Ausgleich von Fertigungstoleranzen seitens der Karosserie geringfügig um die erste Lagerstelle verschwenken, so daß damit der Neigungswinkel gegenüber der Scheibe justierbar ist.

Ferner ist aus der Offenlegungsschrift DE 198 02 491 A1 eine Scheibenreinigungsvorrichtung mit einem Düsenkopf und einem Sockel bekannt, wobei die Scheibenreinigungsvorrichtung als eine nicht verstellbare Einheit gestaltet ist. Der Sockel ist in eine Aussparung in einem Karosserieteil eines Kraftfahrzeuges paßgenau einsetzbar und weist an einer Seitenfläche eine Klipp-Einrichtung auf, die im eingebauten Zustand an dem Karosserieteil angreift und eine lagefeste Fixierung der Scheibenreinigungsvorrichtung an dem Karosserieteil sicherstellt. Der Düsenkopf sitzt im eingebauten Zustand unverstellbar auf dem Karosserieteil auf und besitzt eine Formgebung, die aerodynamischen Gegebenheiten folgt. In dem Düsenkopf sind zwei verschiedene Düseneinrichtungen zum Versprühen von Waschflüssigkeit vorgesehen. Eine gattungsgemäße Scheibenreinigungsvorrichtung ist aus dem Dokument DE197 460 bekannt. Die offenbart alle Merkmale des Oberbegriffs des Anspruchs 1.

Andere bekannte Scheibenreinigungsv richtunge die einen punktförmigen, gebündelten Flüssigkeitsstrahl erzeugen weisen einen an der Karosserie eines Kraftfahrzeugs verdrehbar gelagerten Düsenkopf auf, der ausreichend stabil ausgeführt ist und dessen Formgebung aerodynamisch an eine bestimmte Verdrehposition angepaßt ist. Es ist eine entsprechend den möglichen Belastungen und Drehbewegungen dimensionierte, aufwendige Lagerung an einem Karosserieteil erforderlich. Eine Verstellung des Düsenkopfes führt dazu, daß dieser die aerodynamisch optimierte Lage verläßt, wobei sich unerwünschte Strömungsverhältnisse ergeben.

Der Erfindung liegt die Aufgabe zugrunde, eine Scheibenreinigungsvorrichtung der eingangs genannten Art bereitzustellen, die besonders einfach herstellbar und aerodynamisch optimierbar ist und deren verstellbare Düseneinrichtung besonders geschützt angeordnet ist.

Zur Lösung der Aufgabe eignet sich eine Vorrichtung mit den Merkmalen des Anspruchs 1. Dabei ist eine Düseneinrichtung von einer Düsenkappe umgeben, innerhalb welcher die Düseneinrichtung in einem weiten Bereich verstellbar ist. Die Düsenkappe ist an einem Karosserieteil oder einem sonstigen karosseriefesten Bauteil eines Kraftfahrzeuges fixierbar. Da sie unbeweglich ist, läßt sich die Düsenkappe unabhängig von den möglichen Positionen der Düseneinrichtung aerodynamisch optimieren und genau auf die Strömungsverhältnisse an der Fahrzeugkarosserie abstimmen. Die Düsenkappe kann aus einem gegebenenfalls vom Material der Düseneinrichtung verschiedenen, vorteilhaften Werkstoff, insbesondere aus einem schlagfesten und hitzebeständigen Kunststoff oder einem Leichtmetall hergestellt sein. Vorzugsweise umgibt die Düsenkappe die Düseneinrichtung nahezu allseitig. Die Verstellbarkeit der Düseneinrichtung innerhalb der Düsenkappe ermöglicht einen Einbau der erfindungsgemäßen Scheibenreinigungsvorrichtung ohne bauliche Änderungen in verschiedene Fahrzeugtypen und gestattet eine flexible Justierung der Düseneinrichtung gegenüber der zu reinigenden Scheibe. Ferner ist durch ein Verstellen der Düseneinrichtung auf einfache Weise ein Ausgleich von Fertigungs- und Montagetoleranzen möglich, ohne daß sich an der Außenkontur der Scheibenreinigungsvorrichtung wesentliches ändert. Es besteht die Möglichkeit, mehrere verschiedene Düseneinrichtungen unter einer gemeinsamen Düsenkappe unabhängig voneinander verstellbar zu lagern.

Das Halteteil umfasst eine die Düseneinrichtung rundum abdeckende Düsenkappe, die an wenigstens einer Seite mit wenigstens einer Durchlaßöffnung für die von der Düseneinrichtung gesprühte Reinigungsflüssigkeit ausgestattet ist. Eine derartige Düsenkappe läßt sich nicht nur optimal umströmbar gestalten, sondern schützt die darunter befindliche Düseneinrichtung zuverlässig vor Schmutz, Feuchtigkeit, Eis, Wind, Schlagbelastungen und Wärmeverlusten. Insbesondere bei der Verwendung beheizbarer Düseneinrichtungen ermöglicht eine erfindungsgemäße Düsenkappe eine Reduzierung des Heizenergieverbrauchs in der Düseneinrichtung, da die Düsenkappe eine Auskühlung der Düseneinrichtung verhindert. Dazu kann in der Düsenkappe eine Wärmedämmung vorgesehen sein.

Ferner ist eine derartige Düsenkappe optisch besonders ansprechend gestaltbar. Erfindungsgemäß weist die Düsenvorrichtung eine Welle auf und das Halteteil eine entsprechende Bohrung, wobei eine Verstellung der Düsenvorrichtung mittels einer reibschlüssigen Verbindung zwischen der Welle und der Bohrung gewährleistet ist In weiterer Ausgestaltung der Erfindung weist die Düsenkappe einen Abdeckabschnitt auf, der oberflächenveredelt, beschichtet und/oder lackiert ist. Eine Oberflächenveredelung, Beschichtung oder Lackierung der Düsenkappe kann insbesondere zu Zwecken des Korrosionsschutzes, der Verbesserung der Witterungsbeständigkeit oder der optisch ansprechenden Gestaltung vorgenommen werden. Eine Oberflächenbeschichtung kann darüber hinaus eine strömungstechnisch besonders günstige und schmutzabweisende Eigenschaft haben. Vorzugsweise ist die Düsenkappe verchromt und/oder wenigstens teilweise in der Farbe der benachbarten Karosserieteile lackiert ausgeführt.

In weiterer Ausgestaltung der Erfindung weist die Düsenkappe einen Halteabschnitt auf, der in eine Aussparung in einem Karosserieteil eines Kraftfahrzeuges einsetzbar und an diesem Karosserieteil festlegbar ist. Der Halteabschnitt ist vorzugsweise einstückig mit einem Abdeckabschnitt ausgeführt oder fest mit diesem verbunden, mit dem er gemeinsam die Düsenkappe bildet. Der Halteabschnitt dient einerseits zur Fixierung der Düsenkappe an der Karosserie des Kraftfahrzeuges und andererseits zur beweglichen Lagerung der Düseneinrichtung.

Erfindungsgemäß weist der Halteabschnitt Lagerelemente zur beweglichen Lagerung der Düseneinrichtung auf. Als Lagerelemente kommen vorzugsweise Gleitlager zur Aufnahme mit der Düseneinrichtung verbundener Wellen in Betracht. Insbesondere ein aus Kunststoff hergestellter Halteabschnitt ermöglicht es auf einfache Weise, elastisch verformbare Ausnehmungen mit günstigen Reibungseigenschaften zum Einrasten von Achsen oder Wellen vorzusehen.

In weiterer Ausgestaltung der Erfindung weist der Halteabschnitt wenigstens ein Klipp- und/oder Rastelement auf, mit Hilfe dessen die Düsenkappe an dem Karosserieteil festlegbar ist. Das Klipp- oder Rastelement ragt vorzugsweise seitlich von dem Halteabschnitt ab und ist beim Einbau derart elastisch verformbar, daß es zunächst das Einführen des Halteabschnitts in die Aussparung des Karosserieteils nicht wesentlich behindert und nachfolgend die Aussparung derart hintergreift, daß die Düsenkappe formschlüssig in der Aussparung festgelegt ist. Das Klipp- oder Rastelement wirkt dabei vorzugsweise mit dem Abdeckabschnitt der Düsenkappe derart zusammen, daß das Karosserieteil von ihnen im Zusammenspiel umgriffen wird. Das Klipp- oder Rastelement läßt sich auch derart gestalten, daß es im eingebauten Zustand kraftschlüssig an dem Karosserieteil angreift oder formschlüssig in eine Aussparung seitens des Karosserieteils eingreift.

In weiterer Ausgestaltung der Erfindung weist die Düseneinrichtung eine Fluidic-Düse mit einer fächerförmigen Sprühcharakteristik auf. Die Fluidic-Düse ermöglicht eine Benetzung eines großen Bereiches der zu reinigenden Scheibe mit Reinigungsflüssigkeit. Dadurch ist nur noch eine Verstellbarkeit der Düseneinrichtung im wesentlichen senkrecht zur Fächerebene des erzeugten Sprühstrahls erforderlich, um eine optimale Benetzung der Scheibe durch Justieren der Düseneinrichtung zu gewährleisten.

In weiterer Ausgestaltung der Erfindung ist die Düseneinrichtung um eine Lagerachse verschwenkbar gelagert, die wenigstens annähernd parallel zur Ebene des Sprühstrahls der Fluidic-Düse und/oder zur Oberfläche der zu besprühenden Scheibe ausgerichtet ist. Dadurch ergibt sich eine besonders einfach herstell- und montierbare Düsenkappe. Die Düseneinrichtung läßt sich vorzugsweise senkrecht zur Ebene des Sprühstrahls der Fluidic-Düse und senkrecht zur zu besprühenden Scheibe neigen. Ferner ist trotz einfachem Aufbau eine große Anpassungs- und Justierfähigkeit der Düseneinrichtung gewährleistet.

Diese und weitere Merkmale der Erfindung gehen außer aus den Ansprüchen auch aus der Beschreibung und den Zeichnungen hervor. Die einzelnen Merkmale können jeweils für sich allein oder zu mehreren in Form von Unterkombinationen bei einer Ausführungsform der Erfindung verwirklicht sein. Bevorzugte Ausführungsbeispiele der Erfindung sind in den Zeichnungen dargestellt und werden nachfolgend näher erläutert.

Es zeigen:
- Fig. 1: eine schematische Rückseitenansicht einer erfindungsgemäßen Scheibenreinigungsvorrichtung,
- Fig. 2: eine Schnittansicht der Scheibenreinigungsvorrichtung gemäß Fig. 1 entlang der Linie II-II und
- Fig. 3: eine Düsenkappe eines zweiten Ausführungsbeipieles der erfindungsgemäßen Scheibenreinigungsvorrichtung.

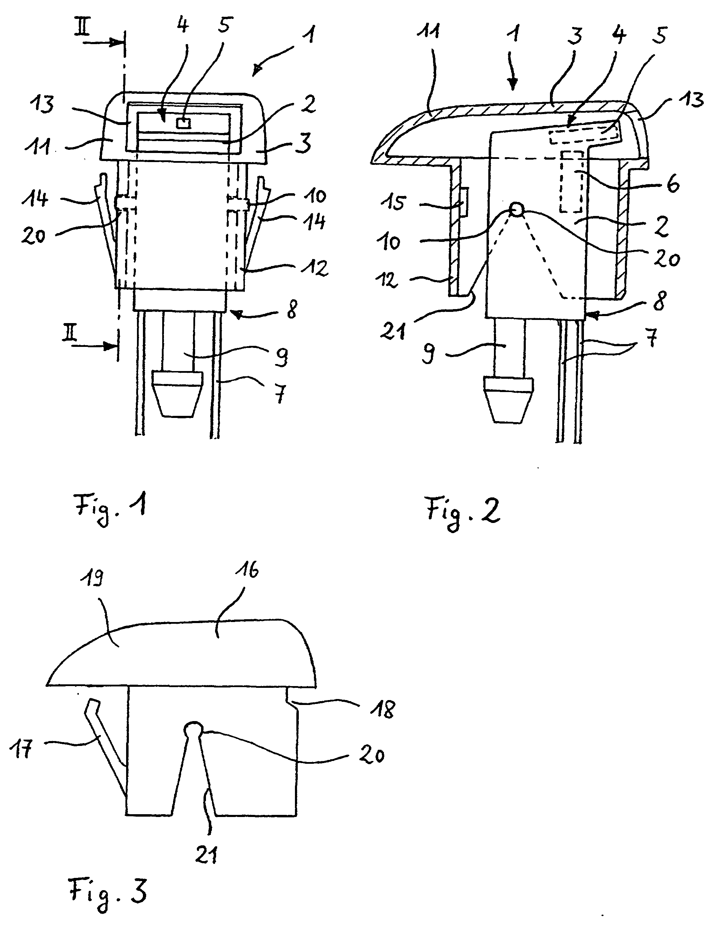

In den Figuren 1 und 2 ist ein erstes Ausführungsbeispiel einer Scheibenreinigungsvorrichtung 1 zur Reinigung einer Windschutzscheibe oder eines Scheinwerferglases eines Kraftfahrzeuges dargestellt. Die Scheibenreinigungsvorrichtung ist in Fahrtrichtung des Kraftfahrzeuges gesehen vor der Windschutzscheibe oder dem Scheinwerfer angeordnet und sprüht rückseitig Reinigungsflüssigkeit gegen die zu reinigende Scheibe. Selbstverständlich ist eine derartige Scheibenreinigungsvorrichtung auch in anderen Verkehrsmitteln und für andere Scheiben sowie in einer anderen Ausrichtung einsetzbar.

Die Scheibenreinigungsvorrichtung 1 umfaßt eine Düseneinrichtung 2, die verschwenkbar in einer Düsenkappe 3 gelagert ist, wobei die Düsenkappe 3 die Düseneinrichtung 2 rundum abdeckt. In einem modifizierten Ausführungsbeispiel können auch mehrere Düseneinrichtungen in einer Düsenkappe angeordnet sein.

Die Düseneinrichtung 2 umfaßt einen Düsenkopf 4 mit einem Düsenelement 5, einem nicht dargestellten Zufuhrkanal für Reinigungsflüssigkeit und einer Heizeinrichtung 6. Als Düsenelement 5 ist eine an sich bereits bekannte sogenannte Fluidic-Düse vorgesehen, die einen Flüssigkeitsstrahl erzeugen kann, der in einer Ebene derart oszilliert, daß sich ein breitgefächerter Sprühstrahl ergibt. Gegenüber herkömmlichen Kugeldüsen, die einen punktförmig austretenden, gebündelten Sprühstrahl erzeugen, ist mittels der Fluidic-Düse ein wesentlich größerer Bereich der zu reinigenden Scheibe mit Reinigungsflüssigkeit benetzbar. In einem modifizierten Ausführungsbeispiel können in dem Düsenkopf 4 mehrere gleiche oder mehrere verschiedene Düsenelemente vorgesehen sein, denen über verschiedene Zufuhrkanäle auch unterschiedliche Waschflüssigkeiten zugeführt werden können. Als Heizeinrichtung 6 ist beispielhaft eine elektrische Widerstandsheizung mit elektrischen Anschlüssen 7 vorgesehen. Durch die Heizeinrichtung 6 kann ein Einfrieren der Reinigungsflüssigkeit in der Düseneinrichtung 2 bei Frost verhindert oder beseitigt werden. Alternativ sind beliebige andere Heizeinrichtungen im Düsenkopf 4 vorsehbar.

Die Düseneinrichtung 2 umfaßt ferner einen Sockel 8 mit einem Anschlußstutzen 9 und Lagerelementen 10 in Form zweier seitlich abragender Wellen. Der Anschlußstutzen 9 ist vorgesehen zum Anschluß eines nicht dargestellten Schlauches, über den der Düseneinrichtung 2 Reinigungsflüssigkeit zuführbar ist. Die Wellen 10 greifen in zwei korrespondierende Bohrungen 20 seitens der Düsenkappe 3 ein, in denen sie drehbar gelagert sind. Im Sockel 8 der Düseneinrichtung 2 ist eine gesonderte Heizeinrichtung vorsehbar; diese kann die Heizeinrichtung 6 im Düsenkopf 4 gegebenenfalls ersetzen.

Die Düsenkappe 3 umfaßt einen Abdeckabschnitt 11, der die Düsenkappe 3 nach oben hin abschließt. In Fahrtrichtung des Kraftfahrzeuges gesehen an seiner Rückseite ist in dem Abdeckabschnitt 11 eine fensterartige Durchlaßöffnung 13 für die von der Düseneinrichtung 2 versprühte Reinigungsflüssigkeit vorgesehen. Der Abdeckabschnitt 11 ist an die Fahrtwind-Strömungsverhältnisse derjenigen Stelle der Kraftfahrzeugkarosserie, an der die Scheibenreinigungsvorrichtung 1 angeordnet sein soll, angepaßt und entsprechend strömungstechnisch günstig geformt. Da die Düsenkappe 3 fest in die Kraftfahrzeugkarosserie eingebaut wird, kann die Form des Abdeckabschnittes 11 genau auf diese einzige Einbauposition hin optimiert werden.

Die Düsenkappe 3 wird von dem Abdeckabschnitt 11 zusammen mit einem Halteabschnitt 12 gebildet, wobei Abdeckabschnitt 11 und Halteabschnitt 12 vorzugsweise einstückig ausgeführt sind. Die Düsenkappe 3 ist beispielsweise aus einem schlagfesten und hitzebeständigen, jedoch auch hinreichend elastischen Kunststoff hergestellt, wobei der Abdeckabschnitt 11 vorzugsweise in der Farbe der benachbarten Kraftfahrzeugkarosserie lackiert ist. Die Farbe sollte dabei zugleich schmutzabweisend und witterungsbeständig sein. Alternativ kann der Abdeckabschnitt 11 auch verchromt, vernickelt oder mit anderen Werkstoffen oberflächenbeschichtet sein. In einem modifizierten Ausführungsbeispiel ist die Düsenkappe 3 aus einem Leichtmetall hergestellt und vorzugsweise gänzlich mit einer korrosionsbeständigen Schutzschicht überzogen.

Der Abdeckabschnitt 11 weist eine größere Breite und eine größere Länge auf als der Halteabschnitt 12, so daß der Halteabschnitt 12 in eine Aussparung in einem Karosserieteil derart einsetzbar ist, daß der Abdeckabschnitt 11 auf dem Karosserieteil aufsitzt, die Düsenkappe 3 also nicht durch die Aussparung hindurchrutschen kann. Wie aus Fig. 1 ersichtlich ist, sind an den Seiten des Halteabschnittes 12 Klipp-Elemente 14 angeordnet, die sich beim Einschieben des Halteabschnittes 12 in die Aussparung des Karosserieteiles elastisch verformen. Sie hintergreifen das Karosserieteil und üben eine Klemmkraft aus sobald die gewünschte Einbauposition der Düsenkappe 3 erreicht ist. Darüber hinaus ist an dem Halteabschnitt 12 eine Ausnehmung 15 in Form einer kleinen Vertiefung vorgesehen, in die ein an dem Karosserieteil gehaltenes Befestigungs- oder Justiermittel formschlüssig eingreifen kann. In einem modifizierten Ausführungsbeispiel sind statt der Klipp-Elemente 14 Rastelemente vorgesehen, die in der Einbauposition keine Klemmkraft ausüben, denen jedoch korrespondierende Ausnehmungen seitens des Karosserieteiles zugeordnet sind, in die sie formschlüssig eingreifen.

In den Seitenwänden des Halteabschnittes 12 sind, wie bereits erwähnt, Bohrungen 20 angeordnet, in denen die Wellen 10 der Düseneinrichtung 2 drehbar gelagert sind. Die Bohrungen 20 sind mit trichterartigen Einführungsschlitzen 21 versehen, in die die Wellen 10 selbstzentrierend einführbar sind. Aufgrund der elastischen Gestaltung des Halteabschnittes 12 und/oder der Wellen 10 lassen sich die Öffnungen zwischen Einführungsschlitzen 21 und Bohrungen 20 geringfügig kleiner als der Durchmesser der Wellen 10 ausführen, so daß die Wellen 10 unter elastischer Verformung des Halteabschnittes 12 und/oder der Wellen selbst in die Bohrungen 20 einrastbar sind. Die Bohrungen 20 selbst sind derart ausgeführt, daß die Wellen 10 darin reibschlüssig festgelegt sind, da die Düseneinrichtung 2 nicht selbständig, sondern nur durch eine äußere Verstellkraft unter Überwindung von Reibungskräften verschwenkbar sein soll. Vorzugsweise sind Übergangs- oder Preßpassungen zwischen Wellen und Bohrungen gewählt. In einem modifizierten Ausführungsbeispiel ist vorgesehen, wenigstens eine Welle 10 mit einer Feststellschraubenverbindung zu versehen. In einem weiteren modifizierten Ausführungsbeispiel ist vorgesehen, die Düsenkappe mit einem zusätzlichen Verstellantrieb für die Düseneinrichtung zu versehen, mit Hilfe dessen die Düseneinrichtung automatisch verstellbar ist.

In Fig. 3 ist eine gegenüber der Düsenkappe 3 leicht modifizierte Düsenkappe 16 eines zweiten Ausführungsbeispiels der erfindungsgemäßen Scheibenreinigungsvorrichtung dargestellt. Die Düsenkappe 16 weist ebenso wie die Düsenkappe 3 Bohrungen 20 mit angrenzenden Einführungsschlitzen 21 auf. Die Düsenkappe 16 ist ebenso wie die Düsenkappe 3 in eine Aussparung eines Karosserieteils eines Kraftfahrzeuges paßgenau einsetzbar. Bei der Düsenkappe 16 ist jedoch statt der seitlichen Klipp-Elemente 14 ein Klipp-Element 17 an der Rückseite der Düsenkappe 16 angeordnet. Ferner ist eine rinnenförmige Ausnehmung 18 an der Vorderseite der Düsenkappe 16 vorgesehen, die in der Einbauposition den Rand der Aussparung des Karosserieteils umgreift. Das Klipp-Element 17 hintergreift das Karosserieteil in der Einbauposition, so daß das Klipp-Element 17 das Karosserieteil zwischen sich und den Abdeckabschnitt 19 der Düsenkappe einklemmt. Es können zusätzlich Ausnehmungen im Halteabschnitt der Düsenkappe 16 vorgesehen sein, in die karosserieseitige Befestigungsmittel form- und/oder kraftschlüssig eingreifen.

Die erfindungsgemäße Scheibenreinigungsvorrichtung zeichnet sich dadurch aus, daß die vorgesehene Düsenkappe einfach herstellbar und fest in ein Karosserieteil des Kraftfahrzeuges einsetzbar ist, wobei die darin verstellbar gelagerte Düseneinrichtung ebenfalls einfach herstellbar ist. Die fahrzeugfest angeordnete Düsenkappe kann aerodynamisch optimiert werden, ohne auf die Verstellung der Düseneinrichtung Rücksicht nehmen zu müssen. Die Düsenkappe bietet der Düseneinrichtung optimalen Schutz gegen Schmutz, Feuchtigkeit, Eis, Wind, Schlagbelastungen und Wärmeverluste und läßt sich zugleich optisch ansprechend gestalten sowie auf die umgebenden Fahrzeugteile abstimmen. Die erfindungsgemäße Scheibenreinigungsvorrichtung läßt sich ohne wesentliche konstruktive Änderungen in verschiedene Fahrzeugtypen einbauen. Insbesondere muß die Düseneinrichtung nicht geändert werden, da sie innerhalb einer entsprechend konzipierten Düsenkappe unabhängig von den Einbaubedingungen der Düsenkappe arbeitet. Speziell die Verwendung einer Fluidic-Düse als Düsenelement in der Düseneinrichtung ermöglicht eine zusätzliche Vereinfachung, da wegen des gefächerten Sprühstrahls der Fluidic-Düse eine Verstellbarkeit der Düseneinrichtung lediglich senkrecht zur Ebene des erzeugten Sprühfächers erforderlich ist, was die Lagerung der Düseneinrichtung innerhalb der Düsenkappe stark vereinfacht. Ferner läßt sich mit der Fluidic-Düse eine bessere Benetzung der zu reinigenden Scheibe mit Reinigungsflüssigkeit erreichen.

## Patentansprüche

1. Scheibenreinigungsvorrichtung (1) insbesondere für ein Kraftfahrzeug mit einer Düseneinrichtung (2) zum Sprühen von Reinigungsflüssigkeit, wobei die Düseneinrichtung (2) verstellbar an einem Halteteil gelagert ist, und das Halteteil als eine die Düseneinrichtung (2) mehrseitig umgebende Düsenkappe (3) gestaltet ist, innerhalb der die Düseneinrichtung (2) verstellbar ist, wobei zur Lagerung der Düseneinrichtung (2) eine Bohrung (20) an dem Halteteil und eine Welle (10) an der Düseneinrichtung (2) an dem Halteteil angeordnet sind, wobei die Düseneinrichtung (2) einen Düsenkopf (4) mit zumindest einem Düsenelement (5) und einem Anschlussstutzen (9) zum Anschluss einer Waschflüssigkeitsleitung aufweist, **dadurch gekennzeichnet, dass** die Düseneinrichtung (2) durch eine reibschlüssige Verbindung zwischen der Bohrung (20) und der Welle (10) der Lagerung in ihrer vorgesehenen Lage gegenüber dem Halteteil gehalten ist.

2. Scheibenreinigungsvorrichtung nach Anspruch 1,
**dadurch gekennzeichnet, daß**
das Halteteil als eine die Düseneinrichtung (2) rundum abdeckende Düsenkappe (3) gestaltet ist, die an wenigstens einer Seite wenigstens eine Durchlaßöffnung (13) für die von der Düseneinrichtung (2) gesprühte Reinigungsflüssigkeit aufweist.

3. Scheibenreinigungsvorrichtung nach einem der Ansprüche 1 oder 2,
**dadurch gekennzeichnet, daß**
die Düsenkappe einen Abdeckabschnitt (11) aufweist, der oberflächenveredelt, beschichtet und/oder lackiert ist.

4. Scheibenreinigungsvorrichtung nach einem der Ansprüche 1 bis 3,
**dadurch gekennzeichnet, daß**
die Düsenkappe (3) einen Halteabschnitt (12) aufweist, der in eine Aussparung in einem Karosserieteil eines Kraftfahrzeuges einsetzbar und an dem Karosserieteil festlegbar ist.

5. Scheibenreinigungsvorrichtung nach Anspruch 4,
**dadurch gekennzeichnet, daß**
der Halteabschnitt (12) Lagerelemente (20) zur beweglichen Lagerung der Düseneinrichtung (2) aufweist.

6. Scheibenreinigungsvorrichtung nach Anspruch 5,
**dadurch gekennzeichnet, daß**
der Halteabschnitt (12) wenigstens ein Klipp- und/oder Rastelement (14, 17) aufweist, mit Hilfe dessen die Düsenkappe (3) an dem Karosserieteil festlegbar ist.

7. Scheibenreinigungsvorrichtung nach einem der Ansprüche 1 bis 6,
**dadurch gekennzeichnet, daß**
die Düseneinrichtung (2) als Düsenelement (5) eine Fluidic-Düse mit einer fächerförmigen Sprühcharakteristik aufweist.

8. Scheibenreinigungsvorrichtung nach Anspruch 7,
**dadurch gekennzeichnet, daß**
die Düseneinrichtung (2) um eine Lagerachse (10) verschwenkbar gelagert ist, die wenigstens annähernd parallel zur Ebene des Sprühstrahls der Fluidic-Düse (5) und/oder zur Oberfläche der zu besprühenden Scheibe ausgerichtet ist.

## Claims

1. Window/lens cleaning device (1), in particular for a motor vehicle, having a nozzle appliance (2) for spraying cleaning fluid, the nozzle appliance (2) being mounted in an adjustable manner on a holding part, and the holding part being designed as a nozzle cap (3) which surrounds the nozzle appliance (2) multilaterally and within which the nozzle appliance (2) can be adjusted, a hole (20) being arranged on the holding part and a shaft (10) being arranged on the nozzle appliance (2) in order to mount the nozzle appliance (2), the nozzle appliance (2) having a nozzle head (4) having at least one nozzle element (5) and a connecting branch (9) for connecting a washer fluid line, **characterized in that** the nozzle appliance (2) is held in the position provided for it opposite the holding part by frictional connection between the hole (20) and the shaft (10) of the mounting.

2. Window/lens cleaning device according to Claim 1, **characterized in that** the holding part is designed as a nozzle cap (3) which completely covers the nozzle appliance (2) and on at least one side has at least one passage opening (13) for the cleaning fluid sprayed by the nozzle appliance (2).

3. Window/lens cleaning device according to one of Claims 1 or 2, **characterized in that** the nozzle cap has a covering section (11) which is surface-finished, coated and/or painted.

4. Window/lens cleaning device according to one of Claims 1 or 3, **characterized in that** the nozzle cap (3) has a holding section (12) which can be inserted into a cutout in a body part of a motor vehicle and can be fastened to the body part.

5. Window/lens cleaning device according to Claim 4, **characterized in that** the holding section (12) has bearing elements (20) for the moveable mounting of the nozzle appliance (2).

6. Window/lens cleaning device according to Claim 5, **characterized in that** the holding section (12) has at least one clipping and/or latching element (14,17) with which the nozzle cap (3) can be fastened to the body part.

7. Window/lens cleaning device according to one of Claims 1 to 6, **characterized in that** the nozzle appliance (2) has as a nozzle element (5) a fluidic nozzle having fan-shaped spraying characteristics.

8. Window/lens cleaning device according to Claim 7, **characterized in that** the nozzle appliance (2) is mounted in a manner such that it can be pivoted about a bearing shaft (10) which is orientated at least approximately parallel to the plane of the spray jet of the fluidic nozzle (5) and/or to the surface of the window/lens to be sprayed.

## Revendications

1. Dispositif de nettoyage de glaces (1), destiné notamment à un véhicule automobile et comportant un système de gicleurs (2) permettant de pulvériser du liquide de nettoyage, le système de gicleurs (2) étant fixé d'une façon réglable à une pièce support et la pièce support étant conçue comme capot des gicleurs (3), qui englobe sur plusieurs côtés le système de gicleurs (2) et à l'intérieur duquel le système de gicleurs (2) est réglable, alors que, pour la fixation du système de gicleurs (2), sont disposés, sur la pièce support, un trou (20) et, sur le système de gicleurs (2), un tourillon (10), et le système de gicleurs (2) comporte une tête de gicleurs (4) avec au moins un élément de pulvérisation (5) et, pour le raccordement d'une conduite de liquide de lavage, un manchon de raccordement (9), **caractérisé par le fait que**
le système de gicleurs (2) est maintenu dans sa position prévue par rapport à la pièce support par une liaison à friction entre le trou (20) et le tourillon de fixation (10).

2. Dispositif de nettoyage de glaces selon la revendication 1 **caractérisé par le fait que**
la pièce support est conçue comme capot des gicleurs (3) recouvrant de tous côtés le système de gicleurs (2) et comportant sur au moins un côté au moins une ouverture (13) pour le liquide de nettoyage pulvérisé par le système de gicleurs (2).

3. Dispositif de nettoyage de glaces selon l'une des revendications 1 ou 2 **caractérisé par le fait que**
le capot des gicleurs comporte une section de recouvrement (11) traitée en surface, recouverte d'une couche protectrice et/ou vernie.

4. Dispositif de nettoyage de glaces selon l'une des revendications 1 ou 3 **caractérisé par le fait que**
le capot des gicleurs (3) comporte une section support (12) qui peut être montée dans un évidement dans une pièce de carrosserie d'un véhicule automobile et fixée à la pièce de carrosserie.

5. Dispositif de nettoyage de glaces selon la revendication 4 **caractérisé par le fait que**
la section support (12) comporte des éléments de fixation (20) permettant de monter le système de gicleurs (2) d'une façon mobile.

6. Dispositif de nettoyage de glaces selon la revendication 5 **caractérisé par le fait que**
la section support (12) comporte au moins un élément d'agrafage et/ou un élément de retenue (14, 17) à l'aide desquels le capot des gicleurs (3) peut être fixé à la pièce de carrosserie.

7. Dispositif de nettoyage de glaces selon l'une des revendications 1 à 6 **caractérisé par le fait que**
le système de gicleurs (2) comporte, en tant qu'élément de pulvérisation (5), un gicleur Fluidic ayant une caractéristique de pulvérisation en forme d'éventail.

8. Dispositif de nettoyage de glaces selon la revendication 7 **caractérisé par le fait que**
le système de gicleurs (2) est monté d'une façon pivotante autour d'un axe de fixation (10) qui est orienté au moins approximativement parallèlement au plan du faisceau de pulvérisation du gicleur Fluidic (5) et/ou à la surface de la glace à arroser.
